Europäisches Patentamt

European Patent Office

Office européen des brevets

(19)

(11) Publication number: **0 006 612**
B1

(12) **EUROPEAN PATENT SPECIFICATION**

(45) Date of publication of patent specification: **18.01.84**

(21) Application number: **79102128.0**

(22) Date of filing: **26.06.79**

(51) Int. Cl.³: **B 01 D 1/00, B 01 D 5/00, C 23 G 5/04, F 25 B 29/00**

(54) Vapor generating and recovering apparatus.

(30) Priority: **28.06.78 US 919978**

(43) Date of publication of application:
**09.01.80 Bulletin 80/1**

(45) Publication of the grant of the patent:
**18.01.84 Bulletin 84/3**

(84) Designated Contracting States:
**DE FR GB IT**

(56) References cited:
**DE - A - 2 161 495**
**DE - A - 2 219 208**
**FR - A - 787 598**
**FR - A - 924 496**
**FR - A - 2 296 827**
**FR - A - 2 313 955**
**US - A - 3 308 839**
**US - A - 3 378 062**
**US - A - 3 869 351**
**US - A - 3 986 345**

(73) Proprietor: McCord, James W.
**9101 Nottingham Pwy**
**Louisville, Kentucky (US)**

(72) Inventor: McCord, James W.
**9101 Nottingham Pwy**
**Louisville, Kentucky (US)**

(74) Representative: Patentanwälte Dipl.-Ing. A.
**Grünecker, Dr.-Ing. H. Kinkeldey, Dr.-Ing. W.**
**Stockmair,**
**Dr. rer. nat. K. Schumann, Dipl.-Ing. P.H. Jakob,**
**Dr. rer. nat. G. Bezold Maximilianstrasse 58**
**D-8000 München 22 (DE)**

Courier Press, Leamington Spa, England.

Vapor generating and recovering apparatus

The invention relates to a vapor generating and recovering apparatus as indicated in the introductory part of claim 1.

Such an apparatus is known from US—A—4,003,798. In such an apparatus, it is very difficult to balance the heat energy in the system such that a sufficient amount of liquid is vaporized but all the generated vapor is also condensed in order to avoid an escape of the vapor to the ambient atmosphere. For solving said problem, the prior apparatus uses a by-pass system which is adapted to by-pass the main evaporator between the main condenser and the low pressure side of the means to compress a refrigerant. In the event that vapor should fall below the condensing area within the compartment, said by-pass system will automatically come into operation by partly or even fully opening a by-pass passage in order to by-pass the evaporator for reducing the cooling effect of the vapor in the apparatus.

When the vapor within the compartment reaches again the condensing area, then the by-pass system is shut off. An excessive amount of heat within the system may be dissipated by the complementary condenser which comes into operation by supplying it with a cooling medium such as cooling water or cooling air when a predetermined temperature of the refrigerant for example, at the output of the main condenser, is detected. In the prior apparatus, the by-pass system is also active during start-up of the apparatus in order to provide the suction side of the means to compress the refrigerant with a sufficient amount of gaseous refrigerant. Then the apparatus initially starts with only the heat of compression supplied by motor energy for the means to compress the refrigerant. Additional heat is quickly obtained from the evaporator by its ability to operate at lower temperature during start-up. As a result, in the prior apparatus, the by-pass system is absolutely necessary for protecting the suction side of the means to compress against a liquid refrigerant since a sufficient amount of a gaseous refrigerant is supplied by the evaporator when it is by-passed during start-up of the apparatus and also for balancing heat energy within the system when both the main condenser and the main evaporator are disposed within a common compartment. However, due to the use of said by-pass system, the capacity of the system cannot be fully utilized since due to heat balancing by the by-pass system, not all of the heat energy as recovered in the system may be generated or vice-versa.

In US—A—3,986,345 an apparatus for recovering heat from a dishwashing machine is explained. Said apparatus comprises a means to compress a refrigerant, a main condenser for heating tank water, an auxiliary condenser for heating rinsing water of the dishwashing machine, two expansion valves connected in parallel to one another, each of which is associated with a shut-off valve, an evaporator and a pressure sensitive switch at the suction side of the means to compress. The evaporator is heated by a warm air vapor mixture as produced at the outlet for the dishes in the dishwashing machine. The heat recovered from said air vapor mixture is used for heating or preheating the tank and rinsing water in the dishwashing machine. In this prior apparatus, the means to compress is switched on and off as required during the operation of the dishwashing machine. Additionally, during operation of the refrigerant system, only one of the expansion valves is conducting by correspondingly actuating the associated shut-off valve in order to provide as much heat as possible during normal operation but to reduce recovering of heat when a predetermined temperature of the refrigerant at the output of the evaporator is detected. The reduced recovery of heat is achieved by using the second expansion valve, the conducting cross-section of which is throttled.

When shutting down the refrigerant system, both shut-off valves are closed and therefore, both expansion valves are non-conducting. Then the means to compress are operated until pressure switch at the suction side detects a pressure below a predetermined value. Then the means to compress is stopped. For start-up of the refrigerant system in the prior apparatus, one of the shut-off valves is opened and therefore, also one of the expansion valves is conducting. As a result, the pressure at the suction side of the means to compress rises above the predetermined value and therefore, the means to compress is switched on. When switching on the means to compress, only a gaseous refrigerant is supplied to its suction side.

In US—A—3,308,839, there is explained an apparatus for cleaning objects with solvent vapor. Said prior apparatus also comprises a refrigerant system having a compressor pump, a condenser, an auxiliary condenser or sub-cooler and an evaporator. The condenser is disposed in a first compartment into which a solvent to be vaporized is sprayed on the condenser. The generated vapor is supplied to a tank into which the objects to be cleaned are brought. The evaporator is arranged within a second compartment communicating via a passage with said tank. In the second compartment, the vapor is condensed and the liquid solvent is returned to a solvent reservoir. The auxiliary condenser is used for subcooling the refrigerant stream-up of an expansion valve and therefore, also of the evaporator in order to provide a sufficient cooling action on the solvent vapor within the second compartment.

It is the task of the invention to improve an apparatus as indicated in the introductory part of claim 1 such that, the capacity of the apparatus can be fully utilized without deteriorating the heat balance in the system.

In a vapor generating and recovering apparatus, said task is solved by the features as claimed in the characterizing part of claim 1.

In accordance with the invention, the improved vapor generating and recovering apparatus does not require a by-pass system for balancing the heat in the system since only the complementary condenser is used for emitting excessive heat out of the system and therefore, out of the compartment and a complementary evaporator is used for supplying heat into the system, that means into the compartment, when it is required, respectively. Therefore, the improved apparatus may operate at its full capacity, that means a maximum amount of liquid within the compartment may be vaporized and a corresponding maximum amount of vapor generated by this may be condensed within the compartment. This is due to the fact that all the refrigerant is used in the main condenser for omitting a maximum amount of heat and is also used in the main evaporator for absorbing a maximum of heat, that means for providing a maximum heating and cooling effect within the common compartment, respectively. Additionally, a by-pass system as used in the prior art is also not required for start-up of the improved apparatus since as known per se, a pump-down valve is disposed between the main condenser and the expansion means. During a pump-down cycle of the apparatus, that means when the apparatus is shut-off, the pump-down valve is closed and the means to compress the refrigerant continues running until the pressure at its suction side falls below a predetermined· level, that means, all the refrigerant is pumped down through the means to compress to the main condenser. As a result, between the pump-down valve and the suction side of the means to compress, no refrigerant is retained which during shut-off of the apparatus could condense and enter the means to compress in liquid form. Therefore, in the improved apparatus, start-up is possible and performed in the same art as in the prior art but without using a by-pass system.

Further developments of the invention are claimed in the sub-claims.

Embodiments of a vapor generating and recovering apparatus, specifically in relation to a vapor cleaning device, are more fully explained in the following description with reference to the drawings;

Figure 1 is a schematic diagram of a vapor generating and recovering apparatus of prior art;

Figure 2 is a schematic diagram showing one modification of the apparatus of Fig. 1;

Figure 3 is a schematic diagram of a preferred vapor generating and recovering apparatus of the present invention;

Figure 4 is a schematic diagram showing one modification of the apparatus of Fig. 3;

Figure 5 is a schematic diagram showing another modification of the apparatus of Fig. 3;

Figure 6 is a schematic diagram showing even another modification of the apparatus of Fig. 3; and

Figure 7 is a schematic diagram showing another modification of the apparatus of Fig. 3.

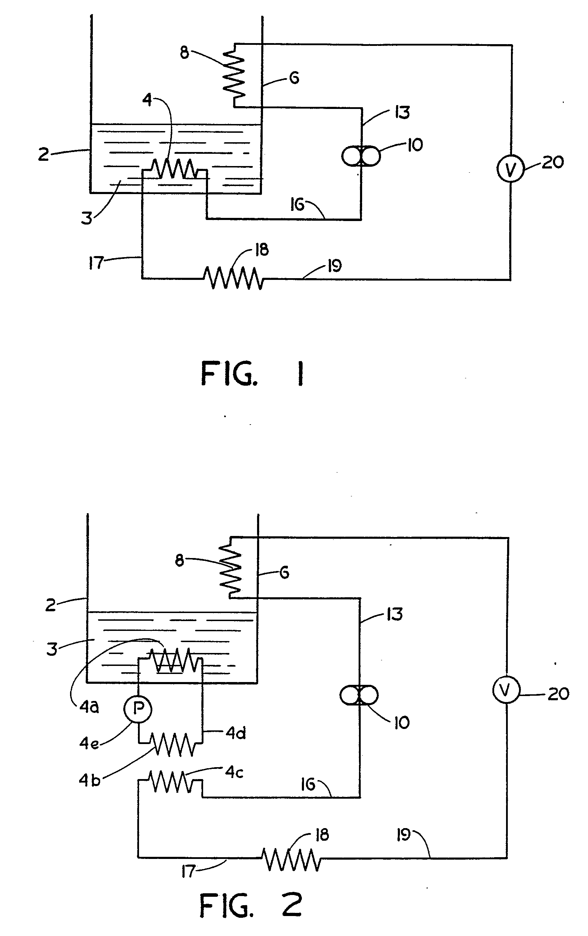

In Fig. 1, a container 2 for vaporizing a liquid 3 and then condensing the vaporized liquid is provided. Disposed along the bottom of the container 2 is a heating coil 4 which provides heat to the liquid 3, heating coil 4 being a condensing coil in a heating and cooling system to be discussed hereinafter. Coil 4 provides sufficient heat to the container 2 to boil and vaporize the liquid therein. When the liquid is a cleaning solvent, the boiling action also provides cleaning power for the solvent.

Disposed along the upper portion of wall 6 is a. cooling coil 8, cooling coil 8 being generally an evaporating coil in a heating and cooling system which will be discussed hereinafter. Cooling coil 8 is provided to maintain a preselected temperature in the container below the vaporizing temperature of the liquid, such as a cleaning solvent thereby condensing the vaporized solvent and preventing the solvent from escaping the container 2. It is realized that the coil 8 may be positioned at other locations in container 2, such as around the periphery thereof, depending upon the cooling conditions and requirements needed.

In the heating and cooling system of Fig. 1, shown schematically, a main compressor 10, of the type used in refrigerating systems, compresses a suitable gaseous refrigerant which flows to the compressor 10 in the refrigerant section conduit 13. Compressor 10 compresses the suitable gaseous refrigerant, which may be Freon 12 (trademark) or the like, to a preselected pressure, and the pressurized hot refrigerant gas flows from the compressor 10 through conduits 16 to the heating coil 4, discussed previously, wherein the refrigerant is condensed therein and upon condensing vaporizes the liquid 3 which is disposed within container 2. The refrigerant then flows through conduit 17 through a complementary condenser 18 condensing and sub-cooling refrigerant and then through conduit 19 to an expansion valve 20 and evaporating coil 8.

In Fig. 2, the device as shown in Fig. 1 and described hereinbefore, is shown, except the means to vaporize the liquid 3 includes a separate heat transfer system. In this embodiment the heating coil 4a is connected to a heating coil 4b which is in heat transfer communication with a condensing coil 4c in a heating and cooling system as described previously. In this embodiment, a heat transfer fluid is disposed to circulate through conduit 4d between heating coils 4a and 4b utilizing pump 4e, heating coil 4b receiving heat from the condensing of refrigerant in condensing coil 4c and subsequently giving up heat through heating coil 4a to the liquid 3. Water is an example of a heat transfer fluid used in the separate heat transfer system, but it is realized that other fluids may be used which are well known to those skilled in the art.

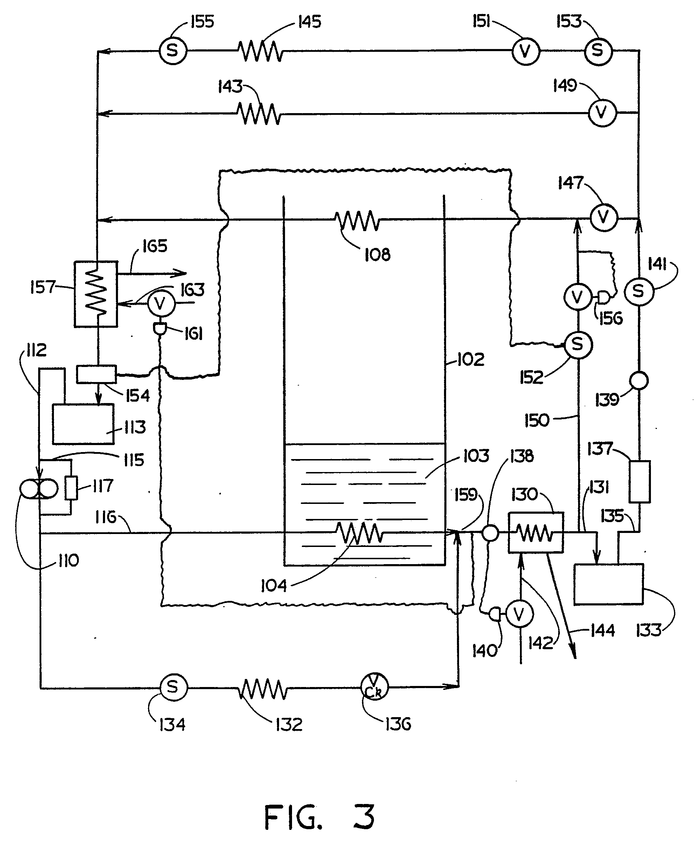

In Fig. 3, a container 102 for vaporizing a liquid 103 and then condensing the vaporized liquid is provided.

Disposed near the bottom of the container 102 thereof is a heating coil 104 which provides heat to vaporize the liquid 103. Heating coil 104 is a condensing coil in a heating and cooling system to be discussed hereinafter.

Disposed at a preselected position in the upper portion of the container 102 is a cooling coil 108, cooling coil 108 being generally an evaporating coil in a heating and cooling system which will be discussed hereinafter. Cooling coil 108 is provided to maintain a preselected temperature of the liquid.

In the heating and cooling system of Fig. 3, shown schematically, a compressor 110, one of the types generally used in refrigerating systems, compresses a suitable refrigerant which flows to the compressor 110 in a refrigerant section conduit 112. Provided within conduit 112 is a suction accumulator 113 which regulates the flow of refrigerant to compressor 110. Suction accumulator 113 is utilized to provide gaseous refrigerant to compressor 110.

Compressor 110 compresses the suitable gaseous refrigerant, which may be Freon 12 or the like, to a preselected pressure, and the pressurized hot refrigerant gas flows from the compressor 110 through the conduit 116 to the heating coil 104, discussed previously, wherein the refrigerant is condensed therein and upon condensing vaporizes the liquid 103 which is disposed within container 102.

A dual pressure control switch 117 disposed in a conduit 115 is also provided and is operable in response to change in the pressure on each side of the compressor 110. Dual pressure control switch 117 is utilized in response to low and high pressures developed by the refrigerant system and is a feature utilized to shut down the heating and cooling system when the system is being pumped down.

In some devices, it is desired to utilize a plurality of heat emitting chambers and in this instance a plurality of condensing units 132 are utilized and disposed within vaporizing chambers or sub-chambers (not shown) generally similar to container 102. As shown, condensers 104 and 132 are in parallel and a solenoid valve 134 is provided to shut off refrigerant flow to the condenser 132 when the chamber(s) in which the condenser(s) 132 is utilized is not in use. Furthermore, a check valve 136 is provided to prevent back up of refrigerant into condenser 132 when not in use.

Also provided downstream of the parallel condensers 104 and 132 is a complementary condenser 130, complementary condenser 130 being utilized to remove excess heat from the boiling system. Complementary condenser 130 is operable in response to a pressure control device 138 in the line upstream of the condenser 130. Pressure control device 138 is actuated in response to a preselected pressure in the line upstream of complementary condenser 130 and in turn actuates and controls flow valve 140. Control flow valve 140 is disposed in the inlet water line 142 which feeds cooling water to the complementary condenser 130. An outlet water line 144 is provided for removing the heated water from the condenser 130.

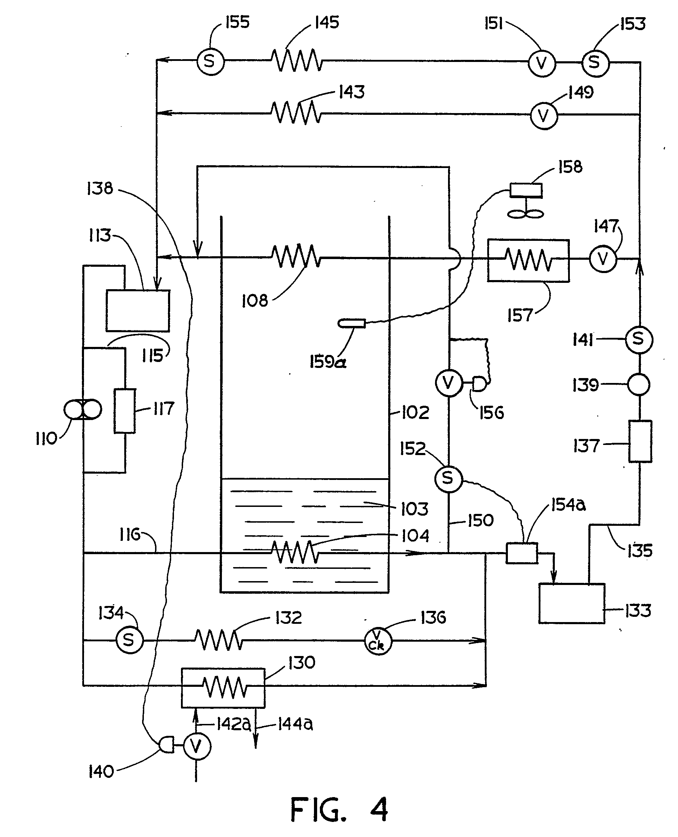

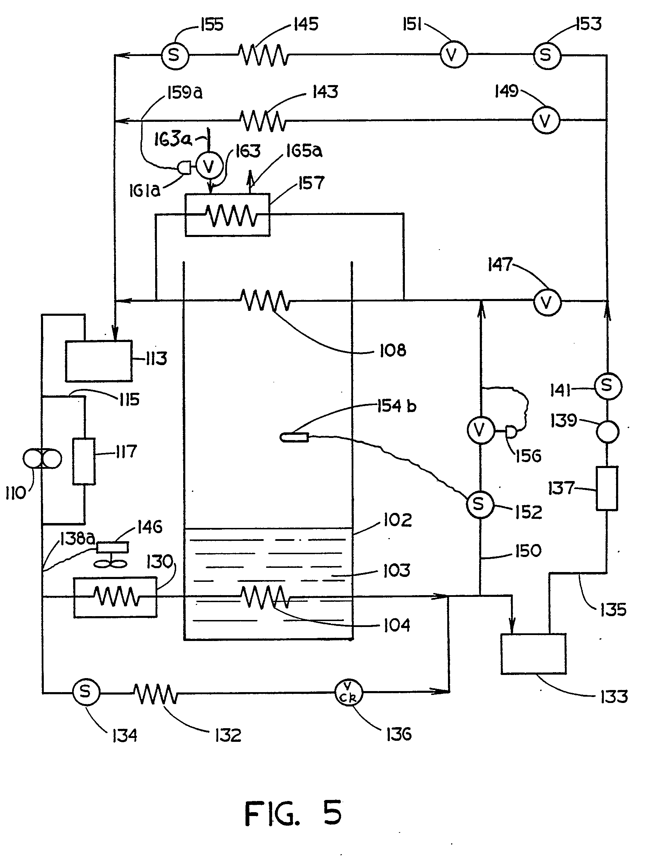

It is realized that the complementary condenser 130 is shown as being in series with the main condenser 104, but it is realized that the complementary condenser 130 may also be in parallel with the main condenser 104 and the supplementary condenser 132 (Fig. 4). Furthermore, the complementary condenser 130 may be upstream of the main and supplementary condensers 104 and 132 (Fig. 5). Even further, the complementary condenser 130 may be air cooled (Fig. 5), refrigerant cooled (Fig. 4), and the like, as well as water cooled as shown in Fig. 3. In Fig. 4, refrigerant line 142a feeds cooling refrigerant to the complementary condenser 130 and an outlet line 144a is provided for removing the heated refrigerant from the condensor 130. In Fig. 5 a motorized blower 146 is provided to blow cooling air across the condenser 130. Also, the pressure control device 138 may be disposed on the high pressure side of the refrigeration system (Fig. 5), as represented by the numeral 138a as well as the pressure controls as shown in Figs. 3 and 4.

The condensed or pressurized liquid refrigerant then flows through conduit 131 to a conventional liquid refrigerant receiver 133. From the liquid refrigerant receiver 133, the refrigerant flows by way of conduit 135 through a drier 137, a moisture indicator 139, a pump down solenoid valve 141, then through a plurality of thermoexpansion valves and direct expansion evaporating coils in parallel, each thermoexpansive valve being in series with an evaporating coil. Three evaporating coils 108, 143 and 145 with thermoexpansion valves 147, 149 and 151 respectively, are shown in the Figures. Evaporator coil 108 is the main or condensing evaporator, as discussed previously, and is disposed within container 102. Evaporating coil 143 is a convection control evaporator and evaporating coil 145 is a supplementary evaporator and is disposed within a condensing chamber or sub-chamber (not shown) generally similar to container 102. As shown, evaporators 108, 143 and 145 are in parallel and solenoid valves 153 and 155 are provided to shut off refrigerant flow to the supplementary evaporator(s) 145 when the chamber(s) in which the evaporator(s) 145 are disposed are not in use.

Also provided downstream of the parallel evaporators 108, 143 and 145 is a complementary evaporator 157, complementary evaporator 157 being utilized to add heat to the system. Complementary evaporator 157 is operable, for example, in response to a pressure control device 159 in the line upstream of complementary condenser 130 and, in turn, actuates and controls flow valve 161. Control flow valve 161 is disposed in the inlet water line 163 which feeds relatively hot water to the complementary evaporator 157. An outlet water line 165 is provided for removing the cooled water from the evaporator 157.

It is realized that the complementary evaporator 157 is shown as being in series with one downstream from the main evaporator 108 (Fig. 3), vut it is realized that the complementary evaporator 157 may also be upstream of the main evaporator 108 (Fig. 4) as well as in parallel therewith (Fig. 5). Furthermore, the complementary evaporator 157 may be air heated (Fig. 4) as well as liquid heated as shown in Fig. 3. In Fig. 4, a motorized blower 158 is provided to blow heating air across the evaporator 157. Even further, the pressure control device 159 may be disposed on the high pressure side of the refrigeration system (Fig. 3) or on the low pressure side of the refrigeration system (Fig. 4). The complementary evaporator may be thermostatically controlled by the rise and fall of vapor temperature in the container 102 (Fig. 4), the temperature change in the low pressure side of the refrigeration system (not shown), or the temperature change on the high pressure side of the refrigeration system.

In Fig. 4, complementary evaporator 157 is disposed upstream of the evaporator 108 with the evaporator 157 being air heated by blower 158 which is operable in response to the temperature in the vapor zone of the container 102 as shown by numeral 159a. In Fig. 5, the complementary evaporator 157 is disposed in parallel with the parallel evaporators 108, 143 and 145; evaporator 157 being thermal fluid heated. Line 163a feeds heating fluid to the complementary evaporator 157 and outlet line 165a is provided for removing the cooled fluid from the evaporator 157. A control valve 161a is provided to control the flow of the heating flow and is actuated in response to the pressure on the low pressure side of the system as shown by numeral 159a.

A by-pass conduit 150 is also provided to by-pass a part of the refrigerant. As shown in Fig. 3, the by-pass 150 is in series with the parallel condensers 104 and 132 and the evaporator 108. By-pass conduit 150 is in parallel with the main flow stream which passes through expansion valves 147, 149 and 151. Flow through conduit 150 is controlled by by-pass solenoid valve 152, which is actuated in response to pressure sensing device 154 which is actuated, in turn, in response to preselected pressure conductions in the flow stream leaving the complementary evaporator 157. A by-pass valve 156 is also provided and is operable for shutting off the flow through the by-pass 150 if the pressure of the refrigerant in the by-pass 150 exceeds a preselected pressure. It is also realized that the by-pass conduit 150 may enter the low pressure side of the refrigeration system after the evaporator 108 (Fig. 4). The by-pass system may be controlled by a manual control valve, a pressure actuated control valve in response to a preselected pressure condition on either the low pressure side (Fig. 3 as indicated by numeral 154) or the high pressure side (Fig. 4 as indicated by numeral 154a) of the system; or a thermostatic actuated control valve operable in response to the rise and fall of vapor temperatures in the container 102 (Fig. 5 as indicated by the numeral 154b) or a preselected temperature in either the low or high pressure side of the system at, for example, the points indicated by numerals 154 in Fig. 3 and 154a in Fig. 4, respectively.

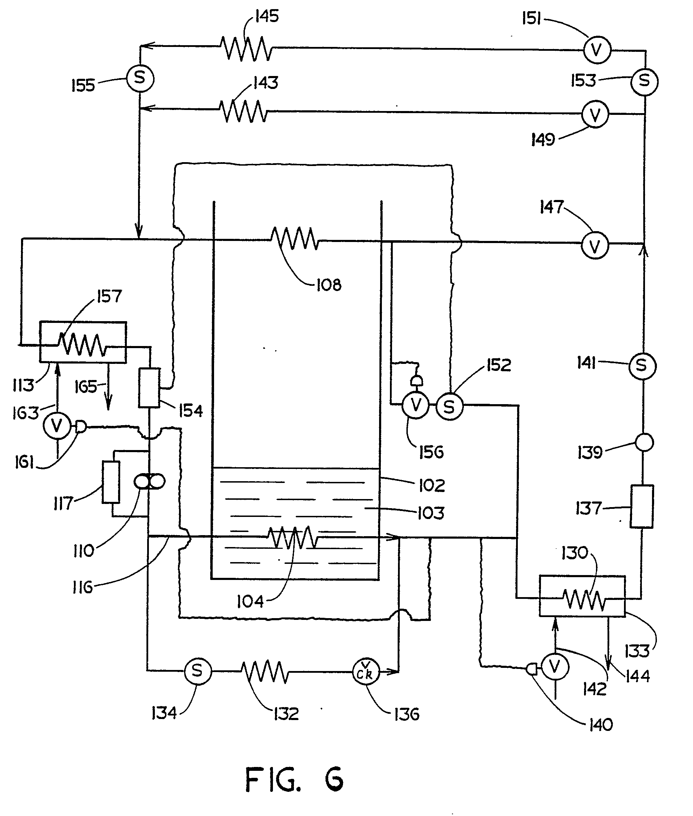

In Fig. 6, another embodiment of the present invention is shown wherein the liquid refrigerant receiver 133 includes the complementary condenser 130 therein and the suction accumulator 113 includes the complementary evaporator 157 therein.

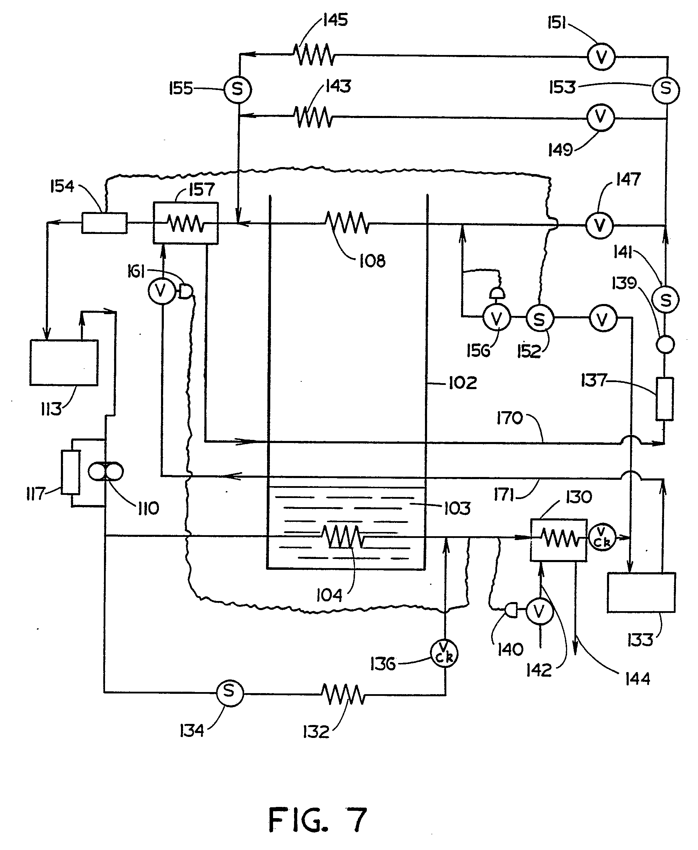

In Fig. 7, another embodiment of the present invention shows the liquid refrigerant being a thermal fluid to emit heat to the low pressure side of the system through the complementary evaporator as indicated by numerals 170 and 171 for the conduits to and from the complementary evaporator 157. This provides additional capacity to the refrigeration system and assures super-heated gas to the low pressure side of the compressor. Furthermore, this assures liquid to the expanion valves.

Although not shown in Figs. 3 to 7, a heat transfer system as shown for example in Fig. 2 of the drawings in connection with the prior art may also be used in connection with the preferred embodiments. Then the heat transfer system may operably interconnect the main condenser 104 of the refrigerant system with a heat emitting means to be arranged within the compartment 102 as principally shown in Fig. 2 of the drawings.

## Claims

1. Vapor generating and recovering apparatus for vaporizing a liquid and condensing a vapor, comprising a housing having at least one compartment (102) therein, for containing said liquid (103) therein, a heating and cooling system in heat transfer relationship with said liquid and said vapor in said compartment, said system including a main condenser (104) in heat emitting relationship with said liquid; an evaporator (108) in heat absorbing relationship with said vapor; a complementary condenser (130) in heat emitting relationship in said system disposed outside said compartment being utilized in response to temperature or pressure to remove excess heat from the apparatus; means (110) to compress a refrigerant, said means to compress being in fluid communication on its high pressure side with said main condenser (104) and on its low pressure side with said main evaporator (108), at least one expansion means (147) disposed between said main condenser (104) and said main evaporator (108) characterized in that a pump down valve (141) is disposed between said main condenser (104) and said expansion means (147) and that a complementary evaporator (157) is disposed outside the compartment (102) and connected in heat absorbing relationship to a heating source (163; 158; 170; 171).

2. The vapor generating and recovering apparatus defined in claim 1, further characterized in that a pressure control switch (117) responsive to refrigerant pressure at said means (110) to compress, shuts said means to compress off when the pressure of the refrigerant on the low pressure side of said means to compress reaches a predetermined low pressure after said pump down valve (141) is closed.

3. The vapor generating and recovering apparatus defined in claim 1, further characterized in that a refrigerant receiver (133) is disposed between said complementary condenser (130) and said pump down valve (141).

4. Vapor generating and recovering apparatus according to any of claims 1 to 3 characterized in that said complementary condenser (130) is refrigerant cooled.

5. Vapor generating and recovering apparatus according to any of claims 1 to 4 characterized in that said complementary evaporator (157) is liquid heated.

6. Vapor generating and recovering apparatus according to any of claims 1 to 4 characterized in that said complementary evaporator (157) is air heated.

7. Vapor generating and recovering apparatus according to any of claims 1 to 4 characterized in that said complementary evaporator (157) is refrigerant heated.

8. Vapor generating and recovering apparatus according to any of claims 1 to 7 characterized in that said complementary evaporator (157) is actuated in response to preselected pressure in said system.

9. Vapor generating and recovering apparatus according to any of claims 1 to 7 characterized in that said complementary evaporator (157) is actuated in response to preselected temperature in said apparatus.

10. Vapor generating and recovering apparatus according to any of claims 1 to 9 characterized in that said complementary evaporator (157) is in series with said main evaporator (108).

11. Vapor generating and recovering apparatus according to claim 10 characterized in that said complementary evaporator (157) is upstream of said main evaporator (108).

12. Vapor generating and recovering apparatus according to claim 10 characterized in that said complementary evaporator (157) is downstream of said main evaporator (108).

13. Vapor generating and recovering apparatus according to any of claims 1 to 9 characterized in that said complementary evaporator (157) is parallel with said main evaporator (108).

14. Vapor generating and recovering apparatus according to any of claims 1 to 13 characterized in that it includes a by-pass system (150) from the high pressure side of said system to the low pressure side of said system.

15. Vapor generating and recovering apparatus according to any of claims 3 to 14 characterized in that said refrigerant receiver (133) and said complementary condenser (130) is in heat transfer relation therewith.

16. Vapor generating and recovering apparatus according to any of claims 1 to 15 characterized in that it includes a suction accumulator (113) on the low pressure side of said system which is in heat transfer relation with said complementary evaporator (157).

17. Vapor generating and recovering apparatus according to any of claims 1 to 16 characterized in that it includes a heat transfer system (4a, 4b) in heat absorbing relation with said main condenser (4c) and in heat emitting relation with said liquid (3).

18. Vapor generating and recovering apparatus according to any of claims 1 to 16 characterized in that it includes a heat transfer system in heat emitting relation with said evaporator and in heat absorbing relation with said vapor.

**Revendications**

1. Appareil générateur et récupérateur de vapeur pour vaporiser un liquide et condenser une vapeur, comprenant un carter ayant au moins un compartiment (102) pour contenir le liquide (103), un système de chauffage et de refroidissement en relation de transfert thermique avec ce liquide et cette vapeur dans ce compartiment, ce système comportant un condenseur principal (104) en relation de fourniture de chaleur avec ce liquide, un évaporateur (108) en relation d'absorption de chaleur avec cette vapeur, un condenseur complémentaire (130) en relation de fourniture de chaleur dans ce système, disposé à l'extérieur du compartiment et utilisé en réponse à la température ou à la pression pour éliminer l'excès de chaleur de l'appareil, des moyens (110) pour comprimer un réfrigérant, ces moyens de compression communiquant sur leur côté haute pression avec le condenseur principal (104) et sur leur côté basse pression avec l'évaporateur principal (108), au moins un moyen d'expansion (147) disposé entre le condenseur principal (104) et l'évaporateur principal (108), caractérisé en ce qu'une valve d'épuisement (141) est disposée entre le condenseur principal (104) et les moyens d'expansion (147) et en ce qu'un évaporateur complémentaire (157) est disposé à l'extérieur du compartiment (102) et est raccordé en relation d'absorption de chaleur à une source de chaleur (163; 158; 170; 171).

2. Appareil générateur et récupérateur de vapeur selon la revendication 1, caractérisé en ce qu'un interrupteur à commande par pression (117), sensible à la pression du réfrigérant dans les moyens de compression (110) ferme ces moyens de compression lorsque la pression du réfrigérant sur le côté basse pression de ces moyens de compression atteint une basse pression prédéterminée après la fermeture de la valve d'épuisement (141).

3. Appareil générateur et récupérateur de vapeur selon la revendication 1, caractérisé en ce qu'un réservoir de réfrigérant (133) est disposé entre le condenseur complémentaire (130) et la valve d'épuisement (141).

4. Appareil générateur et récupérateur de vapeur selon l'une quelconque des revendications 1 à 3, caractérisé en ce que le condenseur complémentaire (130) est refroidi par un réfrigérant,

5. Appareil générateur et récupérateur de vapeur selon l'une quelconque des revendications 1 à 4, caractérisé en ce que l'évaporateur complémentaire (157) est chauffé par un liquide.

6. Appareil générateur et récupérateur de vapeur selon l'une quelconque des revendications 1 à 4, caractérisé en ce que l'évaporateur complémentaire (157) est chauffé par de l'air.

7. Appareil générateur et récupérateur de vapeur selon l'une quelconque des revendications 1 à 4, caractérisé en ce que l'évaporateur complémentaire (157) est chauffé par un réfrigérant.

8. Appareil générateur et récupérateur de vapeur selon l'une quelconque des revendications 1 à 7, caractérisé en ce que l'évaporateur complémentaire (157) est actionné en réponse à une pression présélectionnée dans le système.

9. Appareil générateur et récupérateur de vapeur selon l'une quelconque des revendications 1 à 7, caractérisé en ce que l'évaporateur complémentaire (157) est actionné en réponse à une température présélectionnée dans l'appareil.

10. Appareil générateur et récupérateur de vapeur selon l'une quelconque des revendications 1 à 9, caractérisé en ce que l'évaporateur complémentaire (157) est monté en série avec l'évaporateur principal (108).

11. Appareil générateur et récupérateur de vapeur selon la revendication 10, caractérisé en ce que l'évaporateur complémentaire (157) est monté en amont de l'évaporateur principal (108).

12. Appareil générateur et récupérateur de vapeur selon la revendication 10, caractérisé en ce que l'évaporateur complémentaire (157) est monté en aval de l'évaporateur principal (108).

13. Appareil générateur et récupérateur de vapeur selon l'une quelconque des revendications 1 à 9, caractérisé en ce que l'évaporateur complémentaire (157) est monté en parallèle evec l'évaporateur principal.

14, Appareil générateur et récuperateur de vapeur selon l'une quelconque des revendications 1 à 13, caractérisé en ce qu'il comporte un système de by-pass (150) allant de côté haute pression du système au côté basse pression du système.

15. Appareil générateur et récupérateur de vapeur selon l'une quelconque des revendications 3 à 14, caractérisé en ce que le réfrigérant (133) et le condensateur complémentaire (130) sont en relation de transfert thermique l'un avec l'autre.

16. Appareil générateur et récupérateur de vapeur selon l'une quelconque des revendications 1 à 15, caractérisé en ce qu'il comporte un accumulateur à succion (113) sur le côté basse pression du système, que est en relation de transfert thermique avec l'évaporateur complémentaire (157).

17. Appareil générateur et récupérateur de vapeur selon l'une quelconque des revendications 1 à 16, caractérisé en ce qu'il comporte un système de transfert thermique (4a, 4b) en relation d'absorption de chaleur avec le condenseur principal (4c) et en relation de fourniture de chaleur avec le liquide (3).

18. Appareil générateur et récupérateur de vapeur selon l'une quelconque des revendications 1 à 16, caractérisé en ce qu'il comporte un système de transfert thermique en relation de fourniture de chaleur avec l'évaporateur et en relation d'absorption de chaleur avec la vapeur.

**Patentansprüche**

1. Dampferzeugungs- und -rückgewinnungsvorrichtung zum Verdampfen einer Flüssigkeit und zum Kondensieren eines Dampfes mit einem Gehäuse, das in seinem Inneren mindestens eine Abteilung (102) hat, um in dieser die Flüssigkeit (103) aufzunehmen, einem Heiz- und einem Kühlsystem in wärmeübertragender Beziehung mit der Flüssigkeit und dem Dampf in der Abteilung, wobei das System umfaßt einen Hauptkondensator (104) in wärmeemittierender Beziehung mit der Flüssigkeit; einen Verdampfer (108) in wärmeabsorbierender Beziehung mit dem Dampf; einen komplementären Kondensator (130) in wärmeemittierender Beziehung in dem System, der außerhalb der Abteilung angeordnet sowie in Abhängigkeit von der Temperatur oder dem Druck zum Beseitigen von überschüssiger Wärme aus der Vorrichtung benutzbar ist; einer Einrichtung (110) zum Komprimieren eines Kältemittels, die auf ihrer Hochdruckseite mit dem Hauptkondensator (104) und auf ihrer Niederdruckseite mit dem Hauptverdampfer (108) in Strömungsverbindung steht, sowie mindestens einer zwischen dem Hauptkondensator (104) und dem Hauptverdampfer (108) angeordneten Expansionseinrichtung (147), dadurch gekennzeichnet, daß ein Herunterpump-Ventil (141) zwischen dem Hauptkondensator (104) und der Expansionseinrichtung (147) angeordnet ist und daß ein komplementärer Verdampfer (157) außerhalb der Abteilung (102) angeordnet und in wärmeabsorbierender Beziehung mit einer Wärmequelle (163; 158; 170; 171) verbunden ist.

2. Dampferzeugungs- und -rückgewinnungsvorrichtung nach Anspruch 1, ferner dadurch gekennzeichnet, daß ein auf den Kältemitteldruck an der Einrichtung (110) zum Komprimieren ansprechender Drucksteuerschalter (117) die Einrichtung zum Komprimieren abschaltet, wenn der Kältemitteldruck an der Niederdruckseite der Einrichtung zum Komprimieren einen bestimmten niedrigen Druck erreicht, nachdem das Herunterpump-Ventil (141) geschlossen ist.

3. Dampferzeugungs- und -rückgewinnungsvorrichtung nach Anspruch 1, ferner dadurch gekennzeichnet, daß ein Kältemittelempfänger (133) zwischen dem komplementären Kondensator (130) und dem Herunterpump-Ventil (141) angeordnet ist.

4. Dampferzeugungs- und -rückgewinnungsvorrichtung nach einem der Ansprüche 1 bis 3, dadurch gekennzeichnet, daß der komplementäre Kondensator (130) mit Kältemittel gekühlt ist.

5. Dampferzeugungs- und -rückgewinnungsvorrichtung nach einem der Ansprüche 1 bis 4, dadurch gekennzeichnet, daß der komplementäre Verdampfer (157) mit Flüssigkeit geheizt ist.

6. Dampferzeugungs- und -rückgewinnungsvorrichtung nach einem der Ansprüche 1 bis 4, dadurch gekennzeichnet, daß der komplementäre Verdampfer (157) mit Luft geheizt ist.

7. Dampferzeugungs- und -rückgewinnungsvorrichtung nach einem der Ansprüche 1 bis 4, dadurch gekennzeichnet, daß der komplementäre Verdampfer (157) mit Kältemittel geheizt ist.

8. Dampferzeugungs- und -rückgewinnungsvorrichtung nach einem der Ansprüche 1 bis 7, dadurch gekennzeichnet, daß der komplementäre Verdampfer (157) nach Maßgabe eines vorgewählten Druckes in dem System betätigt wird.

9. Dampferzeugungs- und -rückgewinnungsvorrichtung nach einem der Ansprüche 1 bis 7, dadurch gekennzeichnet, daß der komplementäre Verdampfer (157) nach Maßgabe einer vorgewählten Temperatur in der Vorrichtung betätigt wird.

10. Dampferzeugungs- und -rückgewinnungsvorrichtung nach einem der Ansprüche 1 bis 9, dadurch gekennzeichnet, daß der komplementäre Verdampfer (157) sich in Reihe mit dem Hauptverdampfer (108) befindet.

11. Dampferzeugungs- und -rückgewinnungsvorrichtung nach Anspruch 10, dadurch gekennzeichnet, daß sich der komplementäre Verdampfer (157) stromauf von dem Hauptverdampfer (108) befindet.

12. Dampferzeugungs- und -rückgewinnungsvorrichtung nach Anspruch 10, dadurch gekennzeichnet, daß sich der Komplementäre Verdampfer (157) stromab von dem Hauptverdampfer (108) befindet.

13. Dampferzeugungs- und -rückgewinnungsvorrichtung nach einem der Ansprüche 1 bis 9, dadurch gekennzeichnet, daß der komplementäre Verdampfer (157) parallel zum Hauptverdampfer (108) liegt.

14. Dampferzeugungs- und -rückgewinnungsvorrichtung nach einem der Ansprüche 1 bis 13, dadurch gekennzeichnet, daß sie ein By-Paß-System (150) von der Hochdruckseite des Systems zu der Niederdruckseite des Systems umfaßt.

15. Dampferzeugungs- und -rückgewinnungsvorrichtung nach einem der Ansprüche 3 bis 14, dadurch gekennzeichnet, daß der Kältemittelempfänger (133) und der komplementäre Kondensator (130) sich in wärmeübertragender Beziehung zueinander befinden.

16. Dampferzeugungs- und -rückgewinnungsvorrichtung nach einem der Ansprüche 1 bis 15, dadurch gekennzeichnet, daß sie einen Saugsammler (113) an der Niederdruckseite des Systems umfaßt, der sich in wärmeübertragender Beziehung mit dem komplementären Verdampfer (157) befindet.

17. Dampferzeugungs- und -rückgewinnungsvorrichtung nach einem der Ansprüche 1 bis 16, dadurch gekennzeichnet, daß sie ein Wärmeübertragungssystem (4a, 4b) in wärmeabsorbierender Beziehung mit dem Hauptkondensator (4c) und in wärmeemittierender Beziehung mit der Flüssigkeit (3) umfaßt.

18. Dampferzeugungs- und -rückgewinnungsvorrichtung nach einem der Ansprüche 1 bis 16, dadurch gekennzeichnet, daß sie ein Wärmeübertragungssystem in wärmeemittierender Beziehung mit dem Verdampfer und in wärmeabsorbierender Beziehung mit dem Dampf umfaßt.

FIG. 1

FIG. 2

0 006 612

FIG. 3

FIG. 4

FIG. 5

FIG. 6

FIG. 7

0 006 612